# EUROPEAN PATENT SPECIFICATION

(11) **EP 3 070 961 B1**
(45) Date of publication and mention of the grant of the patent: **19.09.2018**
(21) Application number: 14893243.7
(22) Date of filing: 30.05.2014
(51) Int. Cl.: H04R 1/10, H04R 29/00, H04R 3/00

(54) **CIRCUIT FOR DETECTING BUTTON-PRESSING ACTION OF EARPHONE, TERMINAL, AND EARPHONE**
SCHALTUNG ZUR ERKENNUNG DER BETÄTIGUNG EINES KNOPFS EINES KOPFHÖRERS SOWIE ENDGERÄT UND KOPFHÖRER
CIRCUIT POUR DÉTECTER UNE ACTION DE PRESSION DE BOUTON D'UN ÉCOUTEUR, TERMINAL ET ÉCOUTEUR

(43) Date of publication of application: 21.09.2016
(73) Proprietor: Huawei Technologies Co., Ltd., Longgang District Shenzhen, Guangdong 518129 (CN)
(72) Inventor: SU, Wei, Shenzhen, Guangdong 518129 (CN); KUANG, Huogen, Shenzhen, Guangdong 518129 (CN)
(74) Representative: Körber, Martin Hans
(86) International application number: PCT/CN2014/079001
(87) International publication number: WO 2015/180172

(56) References cited:
- EP-A1- 1 976 246
- WO-A2-2008/028175
- CN-A- 101 841 753
- CN-A- 102 624 957
- CN-A- 102 624 957
- KR-A- 20130 036 906
- US-B2- 7 623 667
- US-B2- 8 548 175

## Description

### TECHNICAL FIELD

Embodiments of the present invention relate to circuit detection technologies, and in particular, to a system comprising a terminal and an earphone.

### BACKGROUND

Currently, all ordinary earphones are provided with a button used to switch between songs in music listening or answer a call for a conversation. Generally, most buttons are implemented in circuits by short-circuiting microphone (MIC) lines of earphones, that is, by connecting a button and a MIC in parallel. When the button is pressed, no voltage exists at two ends of the MIC because the MIC is short-circuited; when the button is not pressed, voltages exist in circuits of the two ends of the MIC. Therefore, when an earphone is inserted into a terminal device, such as a mobile phone or a computer, the terminal device may determine, by monitoring voltages at two ends of a MIC, whether a button is pressed, and thereby implement a corresponding function.

With continuous development of technologies, ordinary earphones gradually evolve into noise reduction earphones with a four-conductor plug. In a noise reduction earphone with a four-conductor plug, a MIC line needs to be used also as a power line (also referred to as a charge line). In this case, if the button is still implemented according to a circuit in an ordinary earphone, because one end of a parallel circuit is connected to a power supply, and the other end is grounded, when the button is pressed, the power line is directly short-circuited to ground, resulting in circuit burnout and causing a great potential risk.

Therefore, a problem to be solved urgently in the industry is how to detect a button on a noise reduction earphone with a four-conductor plug and further implement a corresponding function according to a detected state.

CN102624957A discloses a detection system for an earphone drive-by-wire button of a mobile phone, wherein three switches on an earphone are connected directly or via resistors to the microphone terminal of the detection system, and wherein three comparators output a signal to a microprocessor of the detection system according to the states of the three switches.

EP1976246A1 discloses a headset for a mobile communication device having a multi-button control, wherein the headset comprises a controller which determines which button was pressed and transmits a control signal via a microphone line to the device. In an embodiment, the controller is powered with a battery.

### SUMMARY

Embodiments of the present invention provide a system comprising a terminal and an earphone, with a circuit for detecting a button action on an earphone to detect a button state of a noise reduction earphone with a four-conductor plug and further implement a corresponding function according to the detected state.

An embodiment of the present invention provides a system comprising a terminal and an earphone, wherein the terminal is capable of being connected to the earphone through an earphone interface, where the terminal includes:
a first resistor, provided with a first end and a second end;
a comparator, provided with a first input end, a second input end, and an output end, where the first input end of the comparator is connected to the first end of the first resistor, and the second input end of the comparator is connected to the second end of the first resistor; and configured to output a control signal at the output end of the comparator when a voltage difference between the first input end and the second input end is greater than a first threshold; and
a power supply connected to the first end of the first resistor; and where the earphone includes:
   a second resistor, including a first end and a second end, where when the earphone is connected to the terminal through the earphone interface, the first end of the second resistor is connected to the second end of the first resistor;
   a microphone, MIC, including a first end and a second end, where the first end of the MIC is connected to the first end of the second resistor, and the second end of the MIC is grounded; and
   a button, whose two ends are respectively connected to the second end of the MIC and the second end of the second resistor, where when the button is pressed, the two ends of the button are electrically connected; and wherein
   the terminal further includes:
      a processor, configured to receive the control signal, and execute a function corresponding to the control signal;
      a first analog to digital converter, ADC, where an input end of the first ADC is connected to the first end of the first resistor, and an output end of the first ADC is connected to the processor; and
      a second ADC, where an input end of the second ADC is connected to the second end of the first resistor, and an output end of the second ADC is connected to the processor; where
   the processor is further configured to read an output value of the first ADC and an output value of the second ADC, and compare the output value of the first ADC with the output value of the second ADC,
   and when a difference between the output value of the first ADC and the output value of the second ADC is greater than a second threshold, determine that a charging circuit exists in the earphone and that the power supply is charging the earphone,
   and when the difference between the output value of the first ADC and the output value of the second ADC is not greater than the second threshold, determine that no charging circuit exists in the earphone.

With the circuit for detecting a button action on an earphone in the system provided by the embodiments of the present invention, the terminal device detects a button state by using a button detection circuit, and executes a corresponding action. In the button detection circuit, when a button is in a pressed state, there is resistance between the button and a power supply. Therefore, circuit burnout caused by direct grounding of the power supply is avoided, and detection of the button state of the earphone is implemented.

### BRIEF DESCRIPTION OF DRAWINGS

FIG. 1 is an equivalent circuit diagram of a circuit for detecting a button action on an earphone according to an embodiment of the present invention;
FIG. 2 is an equivalent circuit diagram of a circuit for detecting a button action on an earphone according to another embodiment of the present invention;
FIG. 3 is a schematic structural diagram of a terminal capable of being connected to an earphone through an earphone interface according to an embodiment of the present invention;
FIG. 4 is a schematic structural diagram of a terminal capable of being connected to an earphone through an earphone interface according to another embodiment of the present invention;
FIG. 5 is a schematic structural diagram of an earphone according to an embodiment of the present invention; and
FIG. 6 is a flowchart of a detection method according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

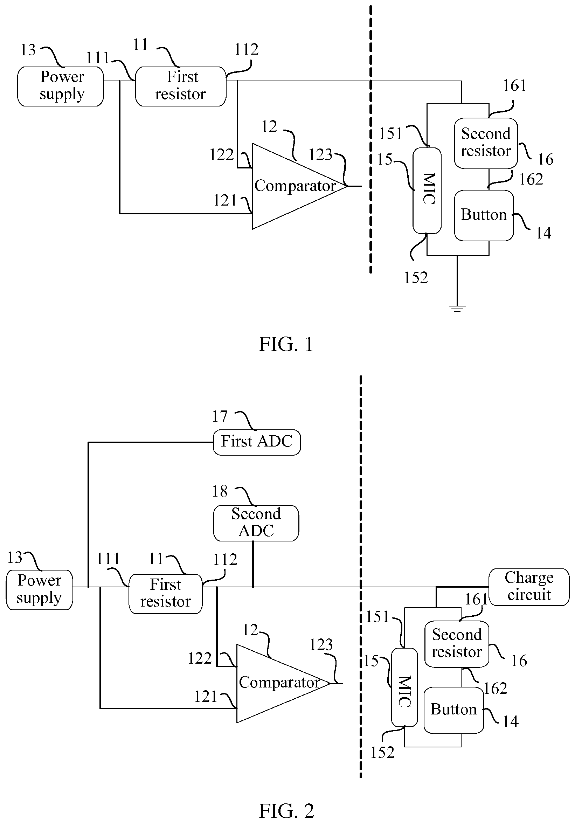

FIG. 1 is an equivalent circuit diagram of a circuit for detecting a button action on an earphone according to an embodiment of the present invention. As shown in FIG. 1, the detection circuit includes a first resistor 11, a comparator 12, a power supply 13, a button 14, a MIC 15, and a second resistor 16, where the first resistor 11 is provided with a first end 111 and a second end 112, the MIC 15 is provided with a first end 151 and a second end 152, and the second resistor 16 is provided with a first end 161 and a second end 162. The first end 111 of the first resistor 11 is connected to the power supply 13. The second end 112 of the first resistor 11 is connected to the first end 151 of the MIC 15 and the first end 161 of the second resistor 16. The comparator 12 is provided with a first input end 121, a second input end 122, and an output end 123. The first input end 121 of the comparator 12 is connected to the first end 111 of the first resistor 11. The second input end 122 of the comparator 12 is connected to the second end 112 of the first resistor 11. Two ends of the button 14 are respectively connected to the second end 152 of the MIC 15 and the second end 162 of the second resistor 16. When the button 14 is pressed, the two ends of the button 14 are electrically connected. The second end 152 of the MIC 15 is grounded.

Referring to FIG. 1, the detection circuit is equivalent to a button detection circuit. When the button 14 is in a pressed state, the MIC 15 and the second resistor 16 are connected in parallel. Because a resistance value of the MIC is relatively large, a parallel resistance value after the MIC 15 and the second resistor 16 are connected in parallel is approximately equal to a resistance value of the second resistor 16. In this case, because the two input ends of the comparator 12 are respectively connected to the two ends of the first resistor 11, a voltage difference between the two input ends of the comparator 12 is a voltage difference between the two ends of the first resistor 11, but a voltage difference between the two ends of the first resistor 11 depends on a current that flows through the first resistor 11. If the resistance value of the second resistor 16 is smaller, the current that flows through the first resistor 11 is stronger, and the voltage difference between the two ends of the first resistor 11 is greater. When the voltage difference is greater than a value, the output end 123 outputs an interrupt signal to a processor (not shown in the figure), for example, a central processing unit (Central Processing Unit, CPU), and the processor implements a corresponding function.

When the button 14 is in an unpressed state, the second resistor 16 is disconnected. The current on the first resistor 11 depends on the resistance value of the MIC 15, where the resistance value of the MIC 15 is fixed and relatively large, the current that flows through the first resistor 11 is weak, and the voltage difference between the two ends of the first resistor 11 is small. In this case, the comparator does not output an interrupt signal to the processor.

As may be known from FIG. 1, due to protection of the first resistor 11 and second resistor 16, when the button 14 is in the pressed state, circuit burnout caused by direct grounding of the power supply 13 can be avoided.

FIG. 2 is an equivalent circuit diagram of a circuit for detecting a button action on an earphone according to another embodiment of the present invention. As shown in FIG. 2, on a basis of the foregoing circuit shown in FIG. 1, the detection circuit provided by the embodiment further includes: a first analog to digital converter ADC 17 and a second ADC 18, where the first ADC 17 is connected to the first end 111 of the first resistor 11, and the second ADC 18 is connected to the second end 112 of the first resistor 11.

Referring to FIG. 2, the parts except the comparator 12 in the detection circuit are equivalent to a recognition circuit. When one end of a parallel circuit formed by connecting the button 14 and the second resistor 16 that are connected in series, to the MIC 15 in parallel, is connected to a charge circuit (shown by the gray padding in the figure), because the power supply 13 supplies power to the charge circuit, the current that flows through the first resistor 11 is strong, and voltages exist at the two ends of the first resistor 11. In this case, the voltage at the first end 111 is an input of the first ADC 17, and the voltage at the second end 112 is an input of the second ADC 18. When a difference between the first ADC 17 and the second ADC 18 is greater than a specific value, it indicates that a charge circuit exists in the circuit. When one end of the parallel circuit formed by connecting the button 14 and the second resistor 16 that are connected in series, to the MIC 15 in parallel, is not connected to the charge circuit (shown by the gray padding in the figure), the current that flows through the first resistor 11 is weak, and therefore the difference between the first ADC 17 and the second ADC 18 is very small and may be ignored. In this case, it indicates that no charge circuit exists in the circuit. The difference between the first ADC 17 and the second ADC 18 may be understood as a result that is obtained after a difference between a binary sequence obtained by the first ADC 17 and a binary sequence obtained by the second ADC 18 is converted into a decimal. In a specific implementation process, both the first ADC 17 and the second ADC 18 may be connected to the processor, and the processor reads and compares numeric values of the first ADC 17 and second ADC 18.

Still referring to FIG. 1 and FIG. 2, in a possible implementation manner, generally components on the left side of the dotted line and components on the right side may be located in different devices. For example, components on the left side of the dotted line may be disposed in a terminal device, and components on the right side of the dotted line may be disposed in an earphone, and when the earphone is inserted into the terminal device, the foregoing button detection function and charge circuit recognition function are implemented.

It should be noted that in the foregoing embodiment, different ADCs may be selected according to requirements. For example, 12-bit ADCs or ADCs of other quantities of bits may be selected as the first ADC 17 and second ADC 18.

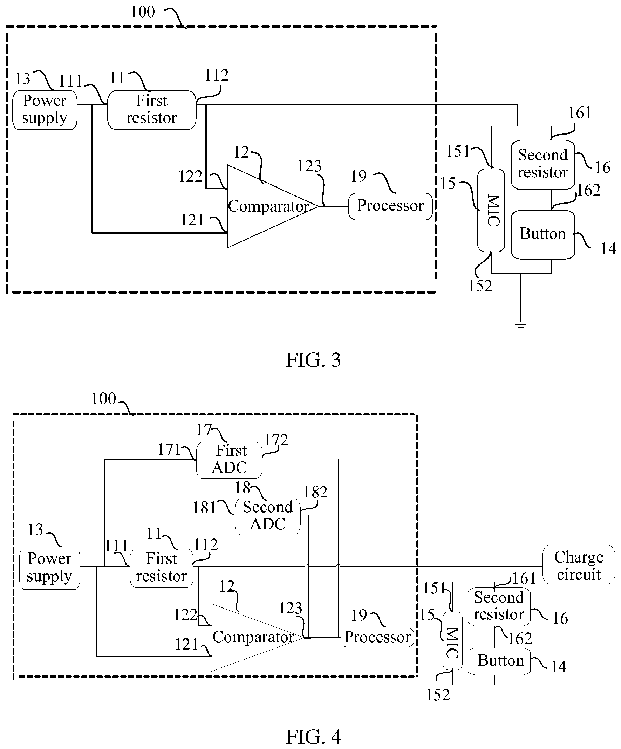

FIG. 3 is a schematic structural diagram of a terminal capable of being connected to an earphone through an earphone interface according to an embodiment of the present invention. As shown in FIG. 3, the terminal 100 provided by the embodiment includes: a first resistor 11, provided with a first end 111 and a second end 112;
a comparator 12, provided with a first input end 121, a second input end 122, and an output end 123, where the first input end 121 of the comparator 12 is connected to the first end 111 of the first resistor 11, and the second input end 122 of the comparator 12 is connected to the second end 112 of the first resistor 11; and configured to output a control signal at the output end 123 of the comparator 12 when a voltage difference between the first input end 121 and the second input end 122 is greater than a threshold; and
a power supply 13 connected to the first end 111 of the first resistor 11; where
the earphone includes:
a second resistor 16, including a first end 161 and a second end 162, where when the earphone is connected to the terminal 100 through the earphone interface, the first end 161 of the second resistor 16 is connected to the second end 162 of the first resistor 16;
a microphone MIC 15, including a first end 151 and a second end 152, where the first end 151 of the MIC 15 is connected to the first end 161 of the second resistor 16, and the second end 152 of the MIC 15 is grounded; and
a button 14, whose two ends are respectively connected to the second end 152 of the MIC 15 and the second end 162 of the second resistor 16, where when the button 14 is pressed, the two ends of the button 14 are electrically connected; and
the terminal 100 further includes:
   a processor 19, configured to receive the control signal, and execute a function corresponding to the control signal.

FIG. 4 is a schematic structural diagram of a terminal capable of being connected to an earphone through an earphone interface according to another embodiment of the present invention. As shown in FIG. 4, optionally, on a basis of the foregoing terminal shown in the FIG. 3, the terminal 100 provided by the embodiment further includes:
a first analog to digital converter ADC 17, where an input end 171 of the first ADC is connected to the first end 111 of the first resistor 11, and an output end 172 of the first ADC 17 is connected to the processor 19; and a second ADC 18, where an input end 181 of the second ADC 18 is connected to the second end 112 of the first resistor 11, and an output end 182 of the second ADC 18 is connected to the processor 19. In a process of identifying an earphone type, the processor 19 is further configured to read an output value of the first ADC 17 and an output value of the second ADC 18, and compare the output value of the first ADC 17 with the output value of the second ADC 18, and when a difference between the output value of the first ADC 17 and the output value of the second ADC 18 is greater than a second threshold, determine that the power supply is charging the earphone and thereby identify the earphone type. That is, if the difference between the output value of the first ADC 17 and the output value of the second ADC 18 is greater than the second threshold, the terminal 100 determines that a charge circuit exists in the earphone and that the earphone is a noise reduction earphone; otherwise, if the difference between the output value of the first ADC 17 and the output value of the second ADC 18 is not greater than the second threshold, the terminal 100 determines that no charge circuit exists in the earphone and that the earphone is an ordinary earphone with a four-conductor plug.

Working principles of the foregoing terminal in FIG. 3 and FIG. 4 are not further described herein. Reference may be made to the embodiments shown in FIG. 1 and FIG. 2.

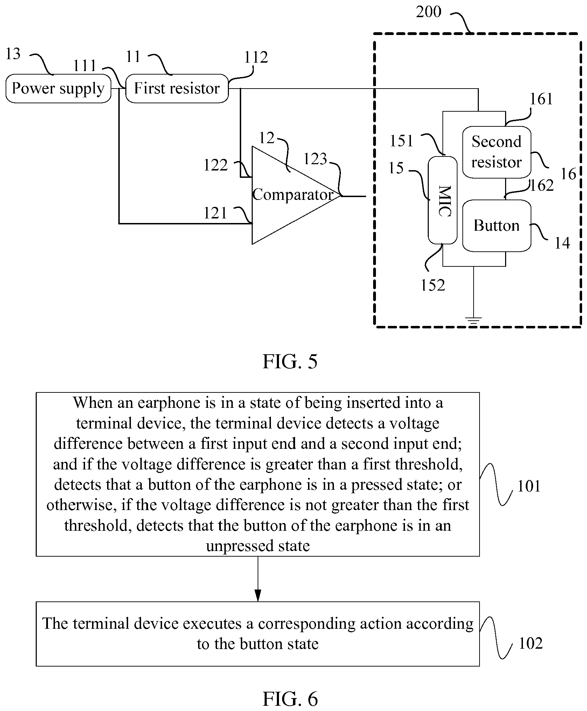

FIG. 5 is a schematic structural diagram of an earphone according to an embodiment of the present invention. As shown in FIG. 5, the earphone 200 provided by the embodiment includes:
a second resistor 16, including a first end 161 and a second end 162, where when the earphone 200 is inserted into a terminal through an earphone interface, the first end 161 of the second resistor 16 is connected to a second end 112 of a first resistor 11;
a microphone MIC 15, including a first end 151 and a second end 152, where the first end 151 of the MIC 15 is connected to the first end 161 of the second resistor 16, and the second end 152 of the MIC 15 is grounded; and
a button 14, whose two ends are respectively connected to the second end 152 of the MIC 15 and the second end 162 of the second resistor 16, where when the button 14 is pressed, the two ends of the button 14 are electrically connected; where
the terminal includes: the first resistor 11, provided with a first end 111 and the second end 112;
a comparator 12, provided with a first input end 121, a second input end 122, and an output end 123, where the first input end 121 of the comparator 12 is connected to the first end 111 of the first resistor 11, and the second input end 122 of the comparator 12 is connected to the second end 112 of the first resistor 11; and configured to output a control signal at the output end 123 of the comparator 12 when a voltage difference between the first input end 121 and the second input end 122 is greater than a threshold; and
a power supply 13 connected to the first end 111 of the first resistor 11.

FIG. 6 is a flowchart of a detection method according to an embodiment of the present invention. Reference may also be made to FIG. 1. In the embodiment, components on the left side of the dotted line are disposed in a terminal device, and components on the right side of the dotted line are disposed in an earphone. The solution is applicable to a terminal device that supplies power to an earphone in which a MIC line is used also as a power line. Specifically, the embodiment includes the following steps:

101. When an earphone is in a state of being inserted into a terminal device, the terminal device detects a voltage difference between a first input end and a second input end; and if the voltage difference is greater than a first threshold, detects that a button of the earphone is in a pressed state; or otherwise, if the voltage difference is not greater than the first threshold, detects that the button of the earphone is in an unpressed state.

In this step, the terminal device detects voltages at two ends of a first resistor by using a button detection circuit. The specific implementation principle is not further described herein. Reference may be made to the foregoing embodiment in FIG. 1.

102. The terminal device executes a corresponding action according to the button state.

After detecting the button state, the terminal device executes the corresponding action. For example, if the terminal device is playing a song, when detecting that the button is in the pressed state, the terminal device executes a song switching action; for another example, if the terminal device is playing a song, when there is an incoming call, a user presses the button, and in this case, the terminal device detects that the button is in the pressed state and connects the call. In addition, functions such as fast forward and fast rewind may be implemented according to a duration for which the button is in the pressed state and the number of continuous presses; however, the present invention is not limited thereto.

In the detection method provided by the embodiment of the present invention, a terminal device detects a button state by using a button detection circuit, and executes a corresponding action. In the button detection circuit, when a button is in a pressed state, there is resistance between the button and a power supply. Therefore, circuit burnout caused by direct grounding of the power supply is avoided, and detection of the button state of the earphone is implemented.

Further, in the embodiment shown in FIG. 6, the earphone may be, for example, a noise reduction earphone with a noise reduction function. Because the terminal device needs to supply power to a module for implementing the noise reduction function in the noise reduction earphone, the noise reduction earphone is an earphone that uses a MIC line also as a power line. In this case, to distinguish the earphone type, the terminal device may further be provided with an earphone detection circuit. The earphone detection circuit includes: a first analog to digital converter ADC and a second ADC, where the first ADC is connected to a first end of a first resistor, and the second ADC is connected to a second end of the first resistor. When the earphone is in a state of being inserted into the terminal device, the terminal device determines whether a difference between the first ADC and the second ADC is greater than a second threshold; and if the difference is greater than the second threshold, detects that the earphone type is a noise reduction earphone; or otherwise, if the difference is not greater than the second threshold, detects that the earphone type is not a noise reduction earphone. Specifically, reference may be made to the foregoing circuit shown in FIG. 2, and no further description is provided herein.

Optionally, in the foregoing embodiment shown in FIG. 6, the power supply is a 5-volt power supply; a resistance value of the first resistor is 10 ohm; the first threshold is 0.5 volts; and a resistance value of a second resistor is 40 ohm. When the detection circuit executes the button detection function, if the button is in the pressed state, a current that flows through the first resistor is about 5V/(10+40)Ω=0.1A, and a voltage difference between two ends of the first resistor is 1V, that is, the voltage difference between the two ends of the first resistor is greater than the first threshold 0.5 volts. In this case, a comparator detects the voltage difference between the two ends of the first resistor and generates an interrupt signal, and outputs the interrupt signal from an output end of the comparator to a CPU. Thereby, the CPU detects that the button is in the pressed state and executes the corresponding action. However, if the button is in the unpressed state, because a resistance value of a MIC is relatively large, the resistance value of the first resistor may be ignored. In this case, the current that flows through the first resistor is very weak. Therefore, the voltage difference between the two ends of the first resistor is also very small, and the comparator does not output any interrupt signal.

It should be noted that in the foregoing embodiment, the present invention is described in detail by using an example in which the first threshold is 0.5 volts; however, the present invention is not limited thereto. In other feasible implementation manners, the first threshold may also be other values. For example, different values may be used as the first threshold according to precision of the comparator.

Further, optionally, in the foregoing embodiment shown in FIG. 6, the second threshold may be, for example, 20 mV. When the detection circuit executes an earphone identification function, that is, when it is necessary to distinguish an ordinary earphone with a four-conductor plug from a noise reduction earphone, the terminal device implements the earphone identification function by detecting the difference between the first ADC and the second ADC. Specifically, when the earphone is a noise reduction earphone, because the terminal device charges a noise reduction function module of the noise reduction earphone, the current that flows through the first resistor is about 15mA; therefore a voltage difference exists between the two ends of the first resistor. The difference between the first ADC and the second ADC is about 150 millivolts (mV), that is, the difference between the first ADC and the second ADC is greater than the second threshold 20mV. In this case, the terminal device detects that the earphone is a noise reduction earphone. Otherwise, if an ordinary earphone is inserted, the terminal device does not need to charge the earphone; therefore the current that flows through the first resistor is very weak and may almost be ignored, and the difference between the first ADC and the second ADC is approximately 0. In this case, the terminal device detects that the earphone is an ordinary earphone with a four-conductor plug.

It should be noted that in the foregoing embodiment, the present invention is described in detail by using an example in which the second threshold is 20mV; however, the present invention is not limited thereto. In other feasible implementation manners, the second threshold may also be other values.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A system comprising a terminal (100) and an earphone (200),
wherein the terminal (100) is capable of being connected to the earphone (200) through an earphone jack, and wherein the terminal (100) comprises:
a first resistor (11), provided with a first end (111) and a second end (112);
a comparator (12), provided with a first input end (121), a second input end (122), and an output end (123), wherein the first input end (121) of the comparator (12) is connected to the first end (111) of the first resistor (11), and the second input end (122) of the comparator (12) is connected to the second end (112) of the first resistor (11); and configured to output a control signal at the output end (123) of the comparator (12) when a voltage difference between the first input end (121) and the second input end (122) is greater than a first threshold; and
a power supply (13), connected to the first end (111) of the first resistor (11); and
wherein the earphone (200) comprises:
a second resistor (16), comprising a first end (161) and a second end (162), wherein when the earphone (200) is connected to the terminal (100) through the earphone jack, the first end (161) of the second resistor (16) is connected to the second end (112) of the first resistor (11);
a microphone (15), MIC, comprising a first end (151) and a second end (152), wherein the first end (151) of the MIC (15) is connected to the first end (161) of the second resistor (16), and the second end (152) of the MIC (15) is grounded; and
a button (14), whose two ends are respectively connected to the second end (152) of the MIC and the second end (162) of the second resistor (16), wherein when the button (14) is pressed, the two ends of the button are electrically connected; and
wherein the terminal (100) further comprises:
a processor (19), configured to receive the control signal, and execute a function corresponding to the control signal;
a first analog to digital converter (17), ADC, wherein an input end (171) of the first ADC is connected to the first end (111) of the first resistor, and an output end (172) of the first ADC (17) is connected to the processor (19); and
a second ADC (18), wherein an input end (181) of the second ADC (18) is connected to the second end (112) of the first resistor, and an output end (182) of the second ADC is connected to the processor (19); wherein
the processor (19) is further configured to read an output value of the first ADC (17) and an output value of the second ADC (18), and compare the output value of the first ADC (17) with the output value of the second ADC (18),
and when a difference between the output value of the first ADC and the output value of the second ADC is greater than a second threshold, determine that a charging circuit exists in the earphone and that the power supply is charging the earphone (200),
and when the difference between the output value of the first ADC and the output value of the second ADC is not greater than the second threshold, determine that no charging circuit exists in the earphone.

## Patentansprüche

1. System, umfassend ein Endgerät (100) und einen Kopfhörer (200),
wobei das Endgerät (100) in der Lage ist, über eine Kopfhörerbuchse mit dem Kopfhörer (200) verbunden zu werden, und wobei das Endgerät (100) umfasst:
einen ersten Widerstand (11), der mit einem ersten Ende (111) und einem zweiten Ende (112) ausgestattet ist;
einen Komparator (12), der mit einem ersten Eingangsende (121), einem zweiten Eingangsende (122) und einem Ausgabeende (123) ausgestattet ist, wobei das erste Eingangsende (121) des Komparators (12) mit dem ersten Ende (111) des ersten Widerstands (11) verbunden ist, und das zweite Eingangsende (122) des Komparators (12) mit dem zweiten Ende (112) des ersten Widerstands (11) verbunden ist; und der konfiguriert ist, um ein Steuersignal an dem Ausgabeende (123) des Komparators (12) auszugeben, wenn eine Spannungsdifferenz zwischen dem ersten Eingangsende (121) und dem zweiten Eingangsende (122) größer als ein erster Schwellenwert ist; und
eine Stromversorgung (13), die mit dem ersten Ende (111) des ersten Widerstands (11) verbunden ist; und
wobei der Kopfhörer (200) umfasst:
einen zweiten Widerstand (16), der ein erstes Ende (161) und ein zweites Ende (162) umfasst, wobei, wenn der Kopfhörer (200) über die Kopfhörerbuchse mit dem Endgerät (100) verbunden ist, das erste Ende (161) des zweiten Widerstands (16) mit dem zweiten Ende (112) des ersten Widerstands (11) verbunden ist;
ein Mikrophon (15), MIC, das ein erstes Ende (151) und ein zweites Ende (152) umfasst, wobei das erste Ende (151) des MICs (15) mit dem ersten Ende (161) des zweiten Widerstands (16) verbunden ist, und das zweite Ende (152) des MICs (15) geerdet ist; und
einen Schalter (14), dessen beide Enden jeweils mit dem zweiten Ende (152) des MICs und dem zweiten Ende (162) des zweiten Widerstands (16) verbunden sind, wobei die beiden Enden des Schalters, wenn der Schalter (14) gedrückt wird, elektrisch verbunden sind; und
wobei das Endgerät (100) ferner umfasst:
einen Prozessor (19), der konfiguriert ist, um das Steuersignal zu empfangen und eine Funktion entsprechend dem Steuersignal auszuführen;
einen ersten Analog-zu-Digital-Wandler (17), ADC, wobei ein Eingangsende (171) des ersten ADCs mit dem ersten Ende (111) des ersten Widerstands verbunden ist, und ein Ausgabeende (172) des ersten ADC (17) mit dem Prozessor (19) verbunden ist; und
einen zweiten ADC (18), wobei ein Eingangsende (181) des zweiten ADCs (18) mit dem zweiten Ende (112) des ersten Widerstands verbunden ist, und ein Ausgabeende (182) des zweiten ADCs mit dem Prozessor (19) verbunden ist; wobei
der Prozessor (19) ferner konfiguriert ist, um einen Ausgabewert des ersten ADCs (17) und einen Ausgabewert des zweiten ADCs (18) zu lesen und den Ausgabewert des ersten ADCs (17) mit dem Ausgabewert des zweiten ADCs (18) zu vergleichen,
und wenn eine Differenz zwischen dem Ausgabewert des ersten ADCs und dem Ausgabewert des zweiten ADCs größer als ein zweiter Schwellenwert ist, Ermitteln, dass in dem Kopfhörer eine Ladeschaltung vorliegt und dass die Stromzufuhr den Kopfhörer (200) lädt,
und wenn die Differenz zwischen dem Ausgabewert des ersten ADCs und dem Ausgabewert des zweiten ADCs nicht größer als ein zweiter Schwellenwert ist, Ermitteln, dass in dem Kopfhörer keine Ladeschaltung vorliegt.

## Revendications

1. Système comprenant un terminal (100) et un écouteur (200),
le terminal (100) étant susceptible d'être raccordé à l'écouteur (200) par une prise écouteur, et le terminal (100) comprenant :
une première résistance (11), pourvue d'une première extrémité (111) et d'une deuxième extrémité (112) ;
un comparateur (12), pourvu d'une première extrémité d'entrée (121), d'une deuxième extrémité d'entrée (122), et d'une extrémité de sortie (123), la première extrémité d'entrée (121) du comparateur (12) étant raccordée à la première extrémité (111) de la première résistance (11), et la deuxième extrémité d'entrée (122) du comparateur (12) étant raccordée à la deuxième extrémité (112) de la première résistance (11); et
configuré pour délivrer un signal de commande à l'extrémité de sortie (123) du comparateur (12) quand une différence de tension entre la première extrémité d'entrée (121) et la deuxième extrémité d'entrée (122) est supérieure à un premier seuil ; et une alimentation (13), raccordée à la première extrémité (111) de la première résistance (11) ; et
l'écouteur (200) comprenant :
une deuxième résistance (16), comprenant une première extrémité (161) et une deuxième extrémité (162), dans lequel quand l'écouteur (200) est raccordé au terminal (100) par la prise écouteur, la première extrémité (161) de la deuxième résistance (16) est raccordée à la deuxième extrémité (112) de la première résistance (11) ; un microphone (15), MIC, comprenant une première extrémité (151) et une deuxième extrémité (152), la première extrémité (151) du MIC (15) étant raccordée à la première extrémité (161) de la deuxième résistance (16), et la deuxième extrémité (152) du MIC (15) étant mise à la terre ; et
un bouton (14), dont deux extrémités sont respectivement raccordées à la deuxième extrémité (152) du MIC et la deuxième extrémité (162) de la deuxième résistance (16), dans lequel quand on appuie sur le bouton (14), les deux extrémités du bouton sont raccordées électriquement ; et
le terminal (100) comprenant en outre :
un processeur (19), configuré pour recevoir le signal de commande, et exécuter une fonction correspondant au signal de commande ;
un premier convertisseur analogique-numérique (17), ADC, une extrémité d'entrée (171) du premier ADC étant raccordée à la première extrémité (111) de la première résistance, et une extrémité de sortie (172) du premier ADC (17) étant raccordée au processeur (19) ; et
un deuxième ADC (18), une extrémité d'entrée (181) du deuxième ADC (18) étant raccordée à la deuxième extrémité (112) de la première résistance, et une extrémité de sortie (182) du deuxième ADC étant raccordée au processeur (19) ; dans lequel
le processeur (19) est également configuré pour lire une valeur de sortie du premier ADC (17) et une valeur de sortie du deuxième ADC (18), et comparer la valeur de sortie du premier ADC (17) avec la valeur de sortie du deuxième ADC (18),
et quand une différence entre la valeur de sortie du premier ADC et la valeur de sortie du deuxième ADC est supérieure à un deuxième seuil, déterminer qu'il existe un circuit de charge dans l'écouteur et que l'alimentation charge l'écouteur (200),
et quand la différence entre la valeur de sortie du premier ADC et la valeur de sortie du deuxième ADC n'est pas supérieure au deuxième seuil, déterminer qu'il n'existe aucun circuit de charge dans l'écouteur.
